# EUROPEAN PATENT APPLICATION

(11) **EP 1 717 553 A2**
(43) Date of publication of application: **02.11.2006**
(21) Application number: 06252284.2
(22) Date of filing: 28.04.2006
(51) Int. Cl.: G01C 21/20, G05D 1/02

(54) **Methods and systems for monitoring atmospheric conditions, predicting turbulent atmospheric conditions and optimizing flight paths of aircraft**

(30) Priority: 29.04.2005 US 118290
(71) Applicant: UNITED TECHNOLOGIES CORPORATION, Hartford, CT 06101 (US)
(72) Inventor: Brown, Rork S., Stafford Springs CT 060761 (US)
(74) Representative: Leckey, David Herbert

(57) **Abstract**

A method for optimizing the flight path (14) of an aircraft (10) is performed by collecting atmospheric information data from one or more sensors (12) mounted on an aircraft (10); processing the collected atmospheric information; predicting an atmospheric condition in a flight path (14) of the aircraft (10) based upon the collected atmospheric information; and modifying the flight path (14) in anticipation of the atmospheric condition.

## Description

### FIELD OF USE

The present application relates to methods and systems for predicting atmospheric conditions, and more particularly, to methods and systems for monitoring atmospheric conditions, predicting turbulent atmospheric conditions, and optimizing the flight path of an aircraft.

### BACKGROUND OF THE INVENTION

Many factors, such as environmental and atmospheric conditions, influence the performance and efficiency of aircraft engines. Atmospheric conditions occurring in the troposphere, where commercial and passenger aircraft may generally fly, and in the stratosphere, where military aircraft may typically fly, can affect a turbine engine's fuel efficiency and even its mechanical operation. However, such atmospheric conditions are not limited to those occurring in the Earth's atmosphere.

For instance, space weather, or solar weather occurring at the sun, affects our weather patterns here. The Solar Heliospheric Observatory, or SOHO, in Greenbelt, Maryland, studies and monitors the sun's solar weather patterns. Such information may be utilized to predict the solar weather's affect on our weather system as is contemplated in United States Patent No. 6,816,786 to Intriligator et al. As documented and discussed therein, solar flares and other space borne weather disturbances can and have interfered with communications with spacecraft, high-flying aircraft and ground based objects.

In our own atmosphere, one of the most common conditions experienced by aircraft is turbulence. Turbulence is basically a stream of air in irregular motion that normally cannot be seen and often occurs unexpectedly. It can be created by a number of different conditions. The most common encounter is flying in the vicinity of a thunderstorm. In fact, a flight through a patch of cloud will often jostle the airplane. Flying over mountainous area with a prevailing cross wind is another major cause of air turbulence. Other causes come from flying near jet streams at high altitude, in a frontal system or where temperature changes occur in any air mass in the sky.

Turbulence can also occur when the sky is clear of clouds. These are known as clear air turbulence. As the name suggests, clear air turbulence occurs in clear air and cannot be seen on the radar. One can encounter clear air turbulence when flying from a slow moving air mass of about 10 to 20 knots into or near a jet stream with speed of well above 100 knots. Although one cannot see clear air turbulence visually, a close scrutiny of the weather charts or the forecasted turbulence factor on the flight path, could usually warn pilots of possible affected areas. Such forecasted turbulence patterns are determined when the flight path is initially generated. However, these patterns change as atmospheric conditions change and the original flight path may not reflect these real time changes.

Presently, Full Authority Digital Engine Controllers, or FADEC, on all aircraft monitor the turbine engine's performance during flight while utilizing various means to account for changes in atmospheric conditions. For example, predictive algorithms are currently employed and neural networks and genetic algorithms are being created and tested to monitor aircraft engine performance and safety-critical applications. Such neural networks and genetic algorithms are described in detail in articles such as "Hybrid Neural-Network/Genetic Algorithm Techniques for Aircraft Engine Performance Diagnostics" by Donald L. Simon, AIAA-2001-3763 (2001); "Verification and Validation of Neural Networks for Safety-Critical Applications" by Jason Hull and David Ward, Proc. Of American Control Conference, Anchorage, AK, (May 8-10 2002); and in United States Patent No. 5,919,267 to Urnes and assigned to McDonnell Douglas Corporation.

These predictive algorithms, neural networks and genetic algorithms monitor engine performance diagnostics at a single moment in time during flight and make predictions concerning, for example, atmospheric conditions, based upon data in real-time for that moment. The turbine engine settings may then be calibrated to account for the atmospheric conditions in real-time at that moment. The data utilized in making such predictions is collected and stored on the aircraft, however; only a fraction of the data collected is used due to data storage issues related to the aircraft's on-board computer systems. As a result, as atmospheric conditions change contemporaneously, the recalibrated turbine engine settings may not be valid when the aircraft arrives in the future state, or the moment following the predicted state.

Consequently, there exists a need for at least a method and system for predicting turbulent atmospheric conditions in a flight path of an aircraft.

### SUMMARY OF THE INVENTION

In accordance with the present invention, a method for optimizing the flight path of an aircraft broadly comprises collecting an atmospheric information data from one or more sensors mounted on an aircraft; processing the atmospheric information; predicting an atmospheric condition in a flight path of the aircraft; and modifying the flight path in anticipation of the atmospheric condition.

A method for monitoring environmental conditions in the atmosphere broadly comprises collecting an atmospheric information data from one or more sensors mounted on an aircraft; processing the atmospheric information; determining a plurality of atmospheric conditions proximate to the aircraft; and reporting the plurality of atmospheric conditions to one or more atmospheric monitoring facilities.

A method for predicting turbulent atmospheric conditions in the flight path of an aircraft broadly comprises collecting an atmospheric information data from one or more sensors mounted on an aircraft; processing the atmospheric information; and predicting a plurality of atmospheric conditions in a flight path of the aircraft.

In accordance with the present invention, a system for optimizing the flight path of an aircraft broadly comprises an atmospheric data processing network comprising a computer network and means for optimizing a flight path of an aircraft in communication with one or more sources of atmospheric information.

A system for monitoring environmental conditions in the atmosphere broadly comprises an atmospheric data processing network comprising a computer network and means for monitoring environmental conditions in an atmosphere proximate to an aircraft in communication with one or more sources of atmospheric information.

A system for predicting turbulent atmospheric conditions in a flight path of an aircraft broadly comprises an atmospheric data processing network comprising a computer network and means for predicting a turbulent atmospheric condition in a flight path of an aircraft in communication with one or more sources of atmospheric information.

The details of one or more embodiments of the invention are set forth in the accompanying drawings and the description below. Other features, objects, and advantages of the invention will be apparent from the description and drawings, and from the claims.

### BRIEF DESCRIPTION OF THE DRAWINGS

FIG. 1 is a representation of an aircraft in a flight path from a past position to a present position to a predicted future position based upon the method(s) and system(s) of the present invention;
FIG. 2 is a representation of an atmospheric data network utilized in conjunction with a local network of the present invention;
FIG. 3 is a representation of an air traffic map illustrating approximately fifty-thousand aircraft occupying the airspace over the United States and surrounding territories on any given day;
FIG. 4 is a representation of the local network of the present invention;
FIG. 5 is a representation of various computational structures of the local network of FIG. 4;
FIG. 6 is a representation of a distributed processing network of the present invention;
FIG. 7 is a representation of the distributed processing network of FIG. 6 implemented in an aircraft; and
FIG. 8 is a representation of a parallel processing network of the present invention.

Like reference numbers and designations in the various drawings indicate like elements.

### DETAILED DESCRIPTION

Method(s) and system(s) of the present invention related to optimizing the flight path of an aircraft, monitoring environmental conditions and predicting turbulent atmospheric conditions in an aircraft's flight path are all described herein. The methods and systems described overcome the lack of data storage of an aircraft by forming either a distributed processing network utilizing one or more microservers and in-flight entertainment systems on board the aircraft or a parallel processing network relying upon a supercomputer and a computer network separate from the aircraft. In either embodiment, one or more sensors mounted on the aircraft collect atmospheric information proximate to the aircraft, which when processed with atmospheric information gathered from external sources, provide a visual display to a pilot. The visual display alerts the pilot to future real-time predicted turbulence patterns ahead and proposed changes to existing, predetermined flight paths made by the electronic engine controller ("EEC") or full authority digital engine controller ("FADEC"). Moreover, the real-time atmospheric information can transform each aircraft into an environmental probe capable of providing atmospheric information concerning weather and pollution to atmospheric information collection sites.

Generally, the microserver may be an on-board computer that serves several functions including but not limited to acting as a router; providing support to other networked computers; collecting, retrieving and transmitting data; hosting a world wide web portal local to the aircraft and accessible to the flight crew. The distributed processing and parallel networks contemplated herein may be local to, or contained solely within, the aircraft itself, and connected to and/or hosted by an external source such as national and/or international weather services, satellites, atmospheric information collection facilities, other aircraft, and the like.

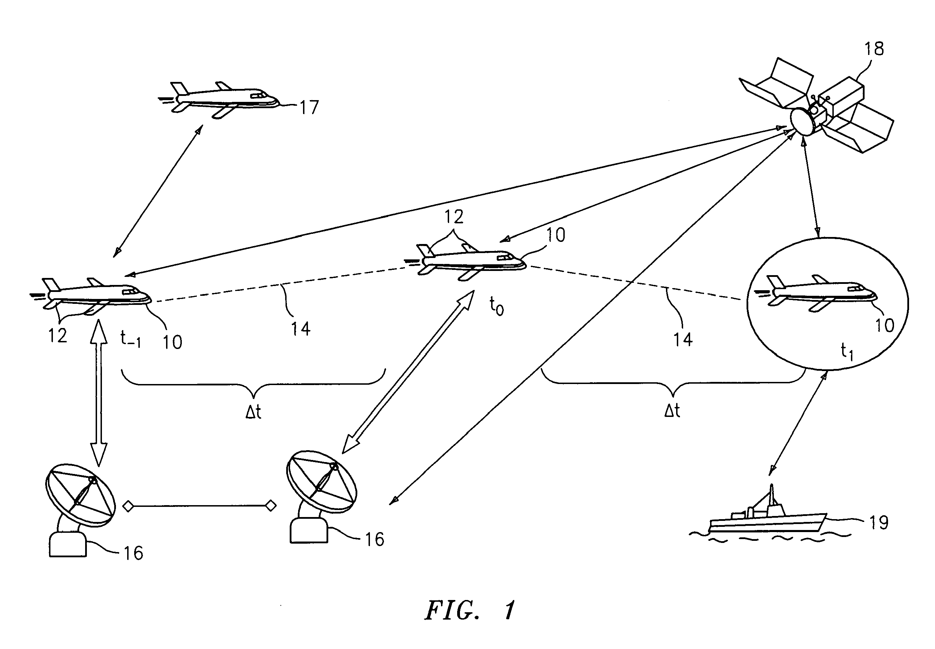

Referring now to FIG. 1, an aircraft 10 is commonly preprogrammed with a flight path 14 and always maintains contact with at least one ground based aircraft monitoring station throughout its flight. In carrying out the methods and systems described herein, aircraft 10 may include one or more sensors 12 calibrated to collect atmospheric information proximate to aircraft 10, that is, the operating environment about aircraft 10. Preferably, aircraft 10 includes a plurality of sensors calibrated to collect atmospheric information including but not limited to moisture, humidity, winds, cross winds, wind speeds, wind shear, altitude, temperature, salinity (salt content), turbulence, air pockets, electrical storms, precipitation, pollution content and the like. Information concerning the pollution content includes but is not limited nitrogen oxides, carbon dioxide, ozone, aerosols, soot, sulfur oxides, turbine engine emissions and the like. Sensors 12 may be mounted to aircraft 10 about its exterior, including but not limited to locations proximate to turbine engines in order to monitor emissions, and/or about interior areas such as turbine engines to monitor engine performance. Such sensors 12 may comprise passive, active or embedded intelligence sensors. For example, passive sensors may collect and relate data to the aircraft's on-board systems as described herein at the request of a member of the flight crew or on an internal clock such as every thirty seconds, two minutes, and the like. Active sensors may collect and relate data independently such that the sensors may identify a problem, mechanical or operational or environmental, and serve as a redundancy or backup to the passive sensors. Sensors having embedded intelligence may also act independently such as described for active sensors but also may execute instructions, commands and sequences in order to correct and/or compensate for system faults.

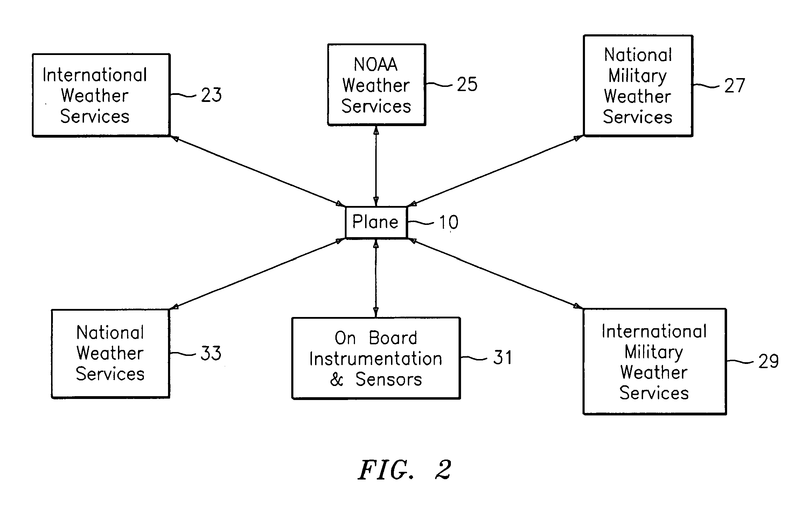

Aircraft 10 may store, permanently or temporarily, the atmospheric information as data on board aircraft 10 as will be described further. In the alternative, aircraft 10 may also transfer the data, in whole or in part, for processing and/or collection to one or more satellites 18 in orbit around the Earth or to one or more ground based atmospheric information collection facilities 16. As shown by the arrows in FIG. 1, aircraft 10 and atmospheric information collection facilities 16 communicate atmospheric information data throughout its flight such that aircraft 10 also receives data from facilities 16. Aircraft 10 also relays such atmospheric information data to satellites 18, which also communicate with facilities 16. In addition, aircraft 10 may also relay such data to one or more other aircraft 17 in order to coordinate flights paths and/or locations, share atmospheric information data, and the like, and may also likewise relay such data to sea-based vessels 19 which are also in contact with atmospheric information collection facilities 16 and satellites 18. This continuous and contemporaneous relay of atmospheric information between aircraft 10, atmospheric information collection facilities 16, aircraft 17, satellites 18 and sea-based vessels 19 constitutes in part an atmospheric data network accessible to any and all members of the flight crew. Referring now to FIG. 2, a representative atmospheric data network is shown. Aircraft equipped with and operating the system(s) and method(s) contemplated herein may communicate, that is, receive, process, transmit, relay and the like, atmospheric information data with various sources such as international weather services 23, National Oceanic and Atmospheric Administration 25, national military weather services 27, international military weather services 29, on-board instrumentation and sensors 31 and national weather services 33.

In accordance with the methods and systems described herein, aircraft 10 at some point in time during its flight may be located at a first position, or past position, (t₋₁). Sensors 12 collect the aforementioned atmospheric information and begin processing the data, that is, transferring the data in whole or in part to facilities 16 and satellites 18 to determine how and where atmospheric conditions may be changing along flight path 14. As aircraft 10 receives such processed atmospheric information, the systems of aircraft 10, which will be discussed in greater detail, adjust the aircraft's engines in response to the predicted changing atmospheric conditions along flight path 14. For example, aircraft 10 may rise in altitude as it approaches a second position, or present position, (to) in order to avoid turbulence, air pocket(s), storm(s) or other atmospheric disturbance(s). All the while, sensors 12 are still collecting atmospheric information concerning the operating environment surrounding the aircraft and relaying such information as data to facilities 16 and satellites 18. And, facilities 16 and satellites 18 are relaying back new information concerning weather patterns and atmospheric conditions at a location ahead of aircraft 10. Again, the systems of aircraft 10 based upon the information being collected and processed on board aircraft 10 along with facilities 16 and satellites 18 make predictions concerning atmospheric conditions in flight path 14 and adjust the aircraft's engines accordingly. The adjustments to the aircraft's engines may also result in altering flight path 14 such that aircraft 10 may now descend to a third position, or a future position, (t₁) in order to avoid an atmospheric disturbance. These predicted atmospheric disturbances and changes to the aircraft's flight path may also be displayed visually for the pilot and all other necessary flight crew using one or more visual displays in the cockpit of the aircraft. Necessary flight crew includes not only those persons aboard the aircraft, but all persons involved in monitoring the aircraft's flight and those persons located on the air, ground or sea and involved in implementation of the methods described herein.

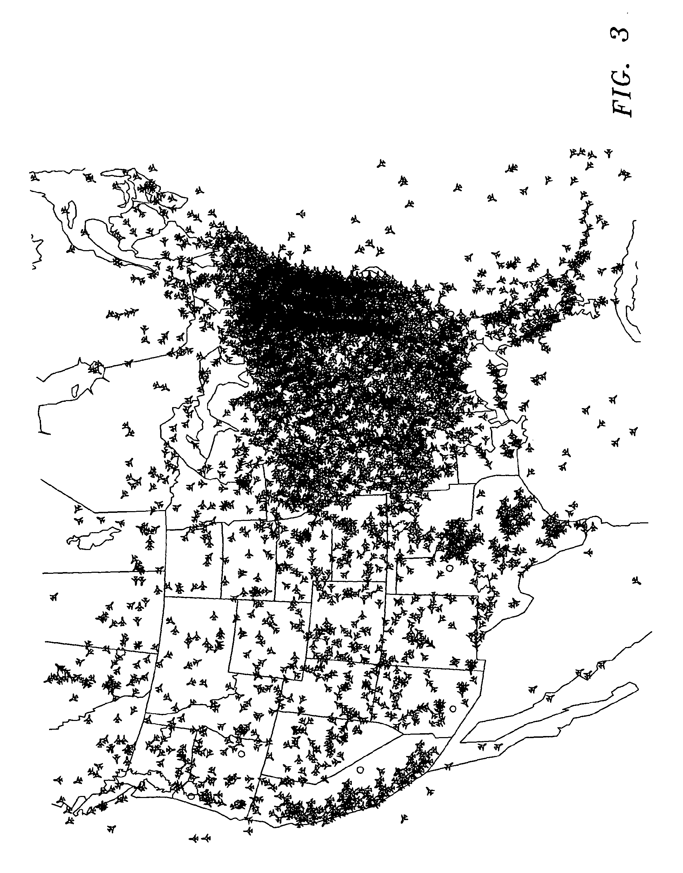

Referring now to FIG. 3, aircraft 10 having sensors 12 may not only collect, process and transfer atmospheric information in order to make predictions and adjust engine(s) and flight path(s) to optimize its performance. The method(s) and system(s) described herein may also transform an aircraft into an environmental probe capable of monitoring and reporting atmospheric conditions proximate to the aircraft's location. As illustrated in FIG. 3 and represented by the aircraft icons, approximately fifty thousand (50,000) aircraft are in flight in the airspace over the United States and surrounding territories throughout any given day. If each or some number of these aircraft were mounted with the aforementioned sensors and method(s) and system(s) of the present invention, each aircraft may then not only report present atmospheric conditions but also predict weather conditions ahead of and along each respective flight path and relay such information for display through their respective internet accessible world wide web sites.

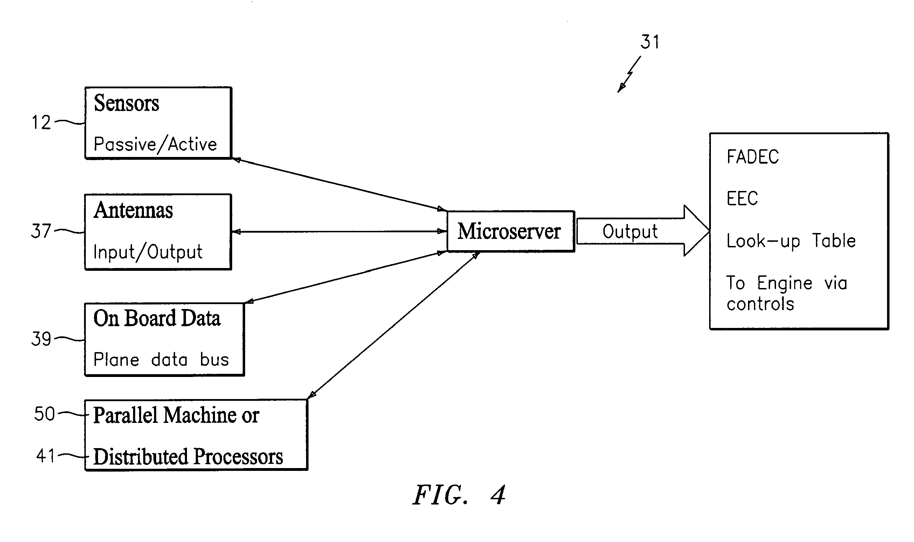

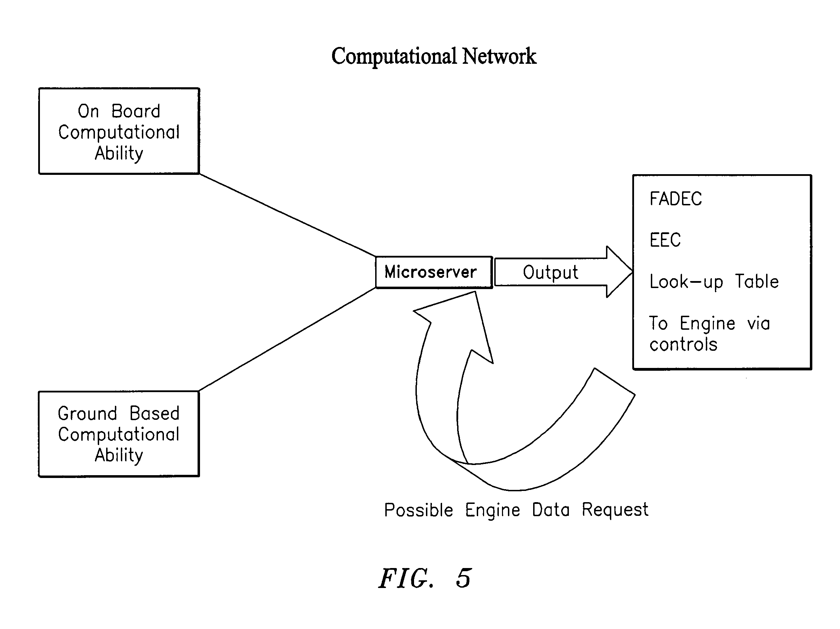

As mentioned earlier, present aircraft systems lack the on-board data storage capacity, processing and computational power required to perform the collection, processing and implementation of the breadth and dearth of atmospheric information contemplated herein. In an effort to overcome this shortcoming, a distributed processing network and a parallel processing network are described herein which provide both storage capacity and computational power necessary to implement methods and systems for optimizing the flight path of an aircraft, monitoring atmospheric and environmental conditions and predicting turbulent atmospheric conditions in an aircraft's flight path. As illustrated in FIG. 4, a representative local network 31 of aircraft 10 may generally include a combination of passive, active and/or embedded sensors 12 as described herein, input and output antennas 37, on-board data 39, and either the distributed processing network or parallel processing network as contemplated herein. These devices provide atmospheric information data to one or more microservers in communication with aircraft 10, which in turn provides the resultant output described herein to various on-board diagnostic systems of aircraft 10. The computational processing structure of these representative networks is further illustrated in FIG. 5, where on-board computational capabilities and ground based computational capabilities combine to provide input to the microserver of the aircraft which processes the data and provides the resultant output described herein to various on-board diagnostic systems of aircraft 10.

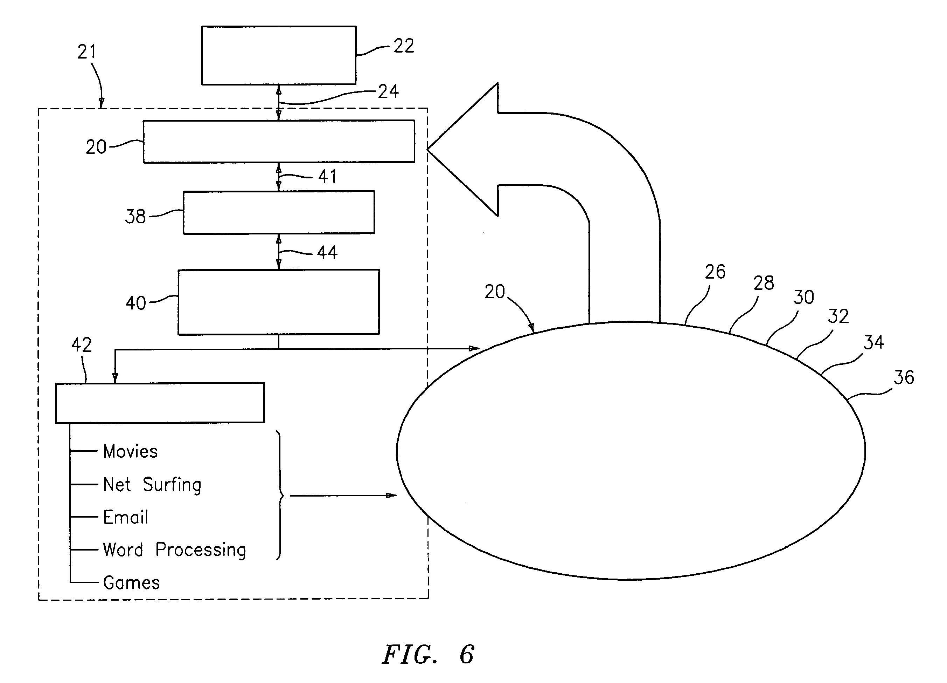

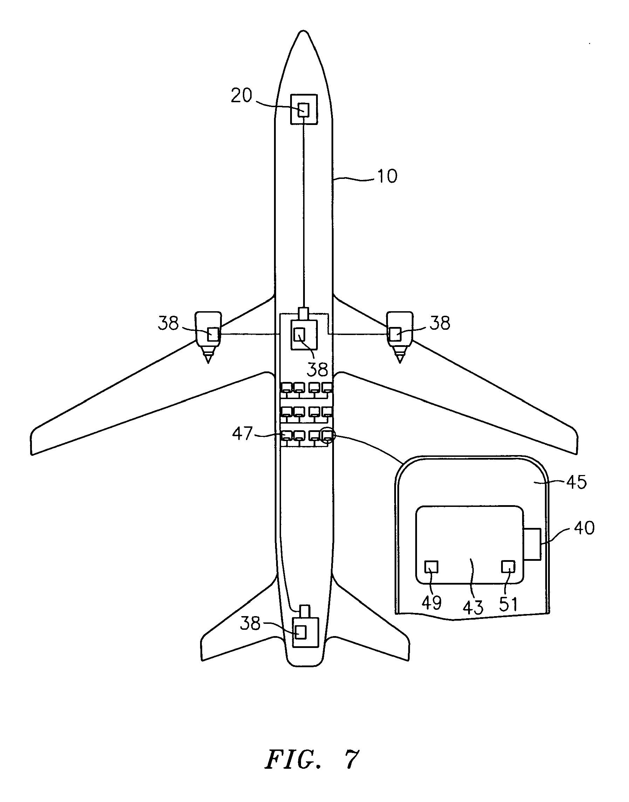

Referring now to FIGS. 6 and 7, multiple representations of a distributed processing network 21 of the present invention are shown. Generally, aircraft 10 include a first microserver 20 comprising a prognostic health maintenance program designed to monitor in conjunction, as indicated by the arrows 24, with the electronic engine control or full authority digital engine controller 22, or EEC/FADEC 22, the entire aircraft 10, including the turbine engines' performance and all other systems and hardware. The prognostic health maintenance microserver 20 includes but is not limited to hardware and software such as early fault detection system(s) 26, multiple harmonics analysis system(s) 28, state machines 30, e.g., finite state machines, and a neural network 32 that operates a fuzzy logic program(s) 34 and genetic algorithm(s) 36. Neural network 32 along with fuzzy logic programs 34 and genetic algorithms 36, referred to as "Fuzzy-Neural Logic network", in conjunction with state machines 30 provide the computational capability to formulate the predictions concerning future atmospheric conditions and disturbances along and during the aircraft's flight path. The amount of data being collected, processed and generated in response to making such predictions is distributed to a second microserver 38 comprising an in-flight entertainment system. In-flight entertainment systems as described herein may now be found on nearly every commercial aircraft; however, their implementation via a microserver as described herein is a novel concept and not presently utilized. In-flight entertainment microserver 38 receives the data via transfers shown by arrows 41 from prognostic health maintenance microserver 20 and FADEC 22.

As illustrated in FIG. 7, in-flight entertainment microserver 38 may comprise a pre-configured entertainment system 42 (shown in FIG. 6) containing movies, internet service portals for internet surfing, email programs, word processing programs, video game programs, and the like, loaded in a microprocessor 40, that is, a plurality of microprocessors 40, with a visual display unit 43; each microprocessor and display unit now commonly found mounted in seatback 45 of a seat 47 in commercial passenger aircraft 10. Visual display units 43 are positioned on seatback 45 of each seat 47 so that display unit 43 may be viewed by the passengers while in a seated position. Optionally, visual display unit 43 and microprocessor 40 may be removed from seat 47 to permit the passengers to hold unit 43 on their laps during the flight. Microprocessor 40 also includes an input device 49 and an output device 51 that will permit a passenger to enter or receive electronic data.

When in use or even not in use, microprocessors 40 form a network capable of temporarily or permanently storing the atmospheric data being collected and processed by sensors 12, prognostic health maintenance microserver 20 and FADEC 22. The data may be distributed as represented by arrows 44 across the plurality of microprocessors 40 and likewise retrieved when needed. In addition to storing data, it is contemplated that those plurality of microprocessors 40 identified as low use or non-use microprocessors as is understood by those skilled in the art may be utilized to perform background "jobs" or routines so as to devote more computational power to further implement the methods described herein.

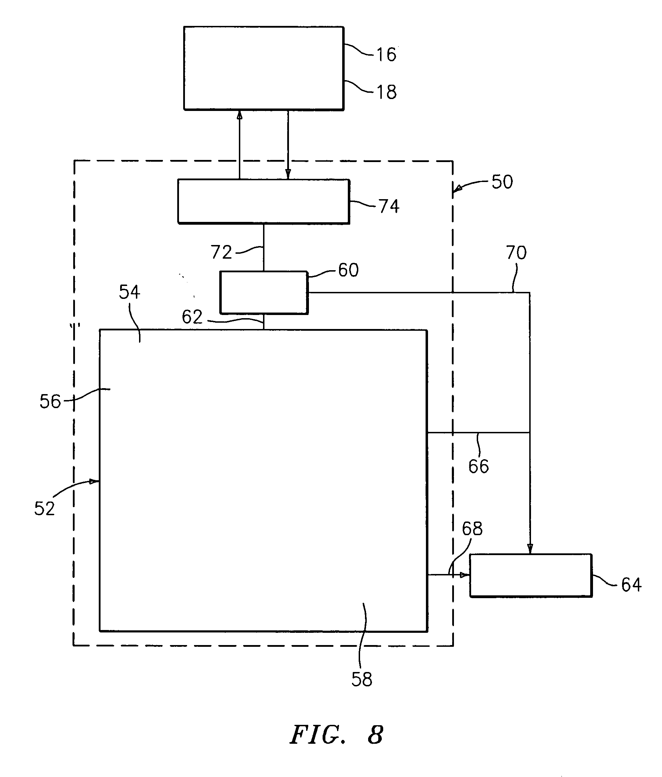

Referring now to FIG. 8, a representation of a parallel processing network 50 of the present invention is shown. In a continuing effort to resolve the computational power and data storage capacity issues surrounding present aircraft systems, parallel processing network 50 proposes incorporating a supercomputer 52 comprising a feedback control system 54 embodying a neural-fuzzy logic network 34 and genetic algorithm 36 (described earlier), and a predictive environment system 58. Supercomputer 52 may comprise any known supercomputer capable of being scaled and implemented in a commercial, passenger or military aircraft. Representative supercomputers include but are not limited to Cray X1E™, Cray XT3™, Cray XD1™ and Cray SX-6™, all commercially available from Cray, Inc. of Seattle, Washington. Supercomputer 52 may receive, process, transfer and share the aforementioned atmospheric information and resultant data with a prognostic health maintenance microserver 60 as indicated by arrows 62, and EEC/FADEC 64 via arrows 66 and 68. Likewise, prognostic health maintenance microserver 60 may also transfer and share the resultant data with EEC/FADEC 64 as indicated by arrow 70, and with a first microserver 74 as indicated by arrows 72. Prognostic health maintenance microserver 60 may generally comprise a dedicated microserver that functions to collect the atmospheric information gathered by the sensors and coordinate this information with supercomputer 52. First microserver 74, in turn, communicates with one or more satellites 18, ground based atmospheric information collection facilities 16, other aircraft 17 and even sea-based vessels 19 as illustrated in FIG. 1.

It is to be understood that the invention is not limited to the illustrations described and shown herein, which are deemed to be merely illustrative of the best modes of carrying out the invention, and which are susceptible to modification of form, size, arrangement of parts, and details of operation. The invention rather is intended to encompass all such modifications which are within its scope as defined by the appended claims.

## Claims

1. A method for optimizing the flight path of an aircraft, comprising:
collecting an atmospheric information from one or more sensors mounted on an aircraft;
processing said atmospheric information;
predicting an atmospheric condition in a flight path of said aircraft; and
modifying said flight path in anticipation of said atmospheric condition.

2. The method of claim 1, further comprising collecting said atmospheric information data from one or more sources of atmospheric information.

3. The method of claim 1 or 2, wherein processing said atmospheric information data comprises processing said atmospheric information data using a distributed processing network.

4. The method of claim 3, wherein said distributed processing network comprises a microserver network comprising a first microserver comprising a prognostic health maintenance system in communication with a full authority digital engine controller, a second microserver comprising an in-flight entertainment system and a plurality of microprocessors, of said aircraft in communication with one or more sources of atmospheric information.

5. The method of claim 2 or 4, wherein said one or more sources of atmospheric information data comprise one or more satellites in orbit around the Earth, one or more atmospheric information collection facilities on Earth, one or more aircraft in flight and one or more sea-based vessels.

6. The method of claim 1 or 2, wherein processing said atmospheric information data comprises processing said atmospheric information data using a parallel processing network.

7. The method of claim 6, wherein said parallel processing network comprises a supercomputer network comprising a supercomputer in parallel communication with a full authority digital engine controller, a first microserver comprising a prognostic health maintenance system, and a second microserver in communication with said one or more sources of atmospheric information, of said aircraft in communication with one or more sources of atmospheric information.

8. The method of claim 7, wherein said one or more sources of atmospheric information data comprises one or more satellites in orbit around the Earth, one or more atmospheric information collection facilities on Earth, one or more aircraft in flight and one or more sea-based vessels.

9. The method of any one of the preceding claims, wherein predicting said atmospheric conditions comprise processing said atmospheric information data using a neural network embodied in said first microserver and operating a fuzzy logic program and a genetic algorithm.

10. The method of any one of the preceding claims, wherein predicting said atmospheric conditions comprises predicting said atmospheric conditions at a location in said flight path beyond a present location of said aircraft.

11. The method of any one of the preceding claims, wherein modifying said flight path comprises altering said flight path in response to said predicted atmospheric conditions at a location in said flight path beyond a present location of said aircraft.

12. The method of any one of the preceding claims, further comprising displaying visually said modified flight path to one or more flight crew.

13. A method for monitoring environmental conditions in the atmosphere, comprising:
collecting an atmospheric information data from one or more sensors mounted on an aircraft;
processing said atmospheric information;
determining a plurality of atmospheric conditions proximate to said aircraft; and
reporting said plurality of atmospheric conditions to one or more atmospheric monitoring facilities.

14. The method of claim 13, wherein processing said atmospheric information data comprises processing said atmospheric information data using a distributed processing network.

15. The method of claim 14, wherein said distributed processing network comprises a microserver network comprising a first microserver comprising a prognostic health maintenance system in communication with an electronic engine controller, a full authority digital engine controller, a second microserver comprising an in-flight entertainment system and a plurality of microprocessors, of said aircraft in communication with one or more sources of atmospheric information.

16. The method of claim 13 or 15, wherein said one or more sources of atmospheric information data comprise one or more satellites in orbit around the Earth, one or more atmospheric information collection facilities on Earth, one or more aircraft in flight and one or more sea-based vessels.

17. The method of claim 13, wherein processing said atmospheric information data comprises processing said atmospheric information data using a parallel processing network.

18. The method of claim 17, wherein said parallel processing network comprises a supercomputer network comprising a supercomputer in parallel communication with an electronic engine controller, a full authority digital engine controller, a first microserver comprising a prognostic health maintenance system, and a second microserver in communication with said one or more sources of atmospheric information, of said aircraft in communication with one or more sources of atmospheric information.

19. The method of any one of claims 13 to 18, further comprising displaying visually said reported atmospheric conditions to one or more flight crew.

20. A method for predicting turbulent atmospheric conditions in the flight path of an aircraft, comprising:
collecting an atmospheric information data from one or more sensors mounted on an aircraft;
processing said atmospheric information; and
predicting a plurality of atmospheric conditions in a flight path of said aircraft.

21. The method of claim 20, further comprising collecting said atmospheric information data from one or more sources of atmospheric information.

22. The method of claim 20 or 21, wherein processing said atmospheric information data comprises processing said atmospheric information data using a distributed processing network.

23. The method of claim 22, wherein said distributed processing network comprises a microserver network comprising a first microserver comprising a prognostic health maintenance system in communication with an electronic engine controller, a full authority digital engine controller, a second microserver comprising an in-flight entertainment system and a plurality of microprocessors, of said aircraft in communication with one or more sources of atmospheric information.

24. The method of claim 21 or 23, wherein said one or more sources of atmospheric information data comprise one or more satellites in orbit around the Earth, one or more atmospheric information collection facilities on Earth, one or more aircraft in flight and one or more sea-based vessels.

25. The method of claim 20 or 21, wherein processing said atmospheric information data comprises processing said atmospheric information data using a parallel processing network.

26. The method of claim 25, wherein said parallel processing network comprises a supercomputer network comprising a supercomputer in parallel communication with an electronic engine controller, a full authority digital engine controller, a first microserver comprising a prognostic health maintenance system, and a second microserver in communication with said one or more sources of atmospheric information, of said aircraft in communication with one or more sources of atmospheric information.

27. The method of claim 26, wherein said one or more sources of atmospheric information data comprises one or more satellites in orbit around the Earth, one or more atmospheric information collection facilities on Earth, one or more aircraft in flight and one or more sea-based vessels.

28. The method of any one of claims 20 to 27, wherein predicting said atmospheric conditions comprise processing said atmospheric information data using a neural network embodied in a prognostic health maintenance system on a microserver of said aircraft and operating a fuzzy logic program and a genetic algorithm.

29. The method of any one of claims 20 to 28, wherein predicting said atmospheric conditions comprises predicting said atmospheric conditions at a location in said flight path beyond a present location of said aircraft.

30. The method of any one of claims 20 to 29, further comprising displaying visually said predicted atmospheric conditions to one or more flight crew.

31. A system for optimizing the flight path of an aircraft, comprising:
an atmospheric data processing network comprising a computer network and means for optimizing a flight path of an aircraft in communication with one or more sources of atmospheric information.

32. The system of claim 31, wherein said means for optimizing said flight path comprises a neural network operating a fuzzy logic program and a genetic algorithm.

33. The system of claim 32, wherein said neural network predicts an atmospheric condition at a location in said flight path beyond a present location of said aircraft using an atmospheric information data collected from a plurality of sensors mounted to said aircraft and said one or more sources of atmospheric information data and optimizes said flight path of said aircraft in response to said predicted atmospheric condition.

34. The system of any one of claims 31 to 33, wherein said computer network is a distributed processing network, wherein said distributed processing network comprises:
a first microserver comprising a prognostic health maintenance system and means for optimizing said flight path in communication with an electronic engine controller, a full authority digital engine controller, a second microserver comprising an in-flight entertainment system in communication with a plurality of microprocessors.

35. The system of any one of claims 31 to 33, wherein said computer network is a parallel processing network, wherein said parallel processing network comprises:
a supercomputer in parallel communication with a full authority digital engine controller, a first microserver comprising a prognostic health maintenance system and means for optimizing said flight path, and a second microserver in communication with said one or more sources of atmospheric information.

36. The system of any one of claims 31 to 35, wherein said one or more sources of atmospheric information data comprises one or more satellites in orbit around the Earth, one or more atmospheric information collection facilities on Earth, one or more aircraft in flight and one or more sea-based vessels.

37. The system of any one of claims 31 to 36, further comprising a visual display unit to display a modified flight path to one or more flight crew.

38. A system for monitoring environmental conditions in the atmosphere, comprising:
an atmospheric data processing network comprising a computer network and means for monitoring environmental conditions in an atmosphere proximate to an aircraft in communication with one or more sources of atmospheric information.

39. The system of claim 38, wherein said means for monitoring environmental conditions in said atmosphere proximate to said aircraft comprises a neural network operating a fuzzy logic program and a genetic algorithm.

40. The system of claim 39, wherein said neural network collects an atmospheric information data from a plurality of sensors mounted to said aircraft.

41. The system of any one of claims 38 to 40, wherein said computer network is a distributed processing network, wherein said distributed processing network comprises:
a first microserver comprising a prognostic health maintenance system and said means for monitoring environmental conditions in said atmosphere proximate to said aircraft in communication with an electronic engine controller, a full authority digital engine controller, a second microserver comprising an in-flight entertainment system in communication with a plurality of microprocessors.

42. The system of any one of claims 38 to 40, wherein said atmospheric data processing network is a parallel processing network, wherein said parallel processing network comprises:
a supercomputer in parallel communication with an electronic engine controller, a full authority digital engine controller, a first microserver comprising a prognostic health maintenance system and means for monitoring environmental conditions in said atmosphere proximate to said aircraft, and a second microserver in communication with said one or more sources of atmospheric information.

43. The system of any one of claims 38 to 42, wherein said one or more sources of atmospheric information data comprises one or more satellites in orbit around the Earth, one or more atmospheric information collection facilities on Earth, one or more aircraft in flight and one or more sea-based vessels.

44. The system of any one of claims 38 to 43, further comprising a visual display to display said monitored environmental conditions to one or more flight crew.

45. A system for predicting turbulent atmospheric conditions in a flight path of an aircraft, comprising:
an atmospheric data processing network comprising a computer network and means for predicting a turbulent atmospheric condition in a flight path of an aircraft in communication with one or more sources of atmospheric information.

46. The system of claim 45, wherein said means for optimizing said flight path comprises a neural network operating a fuzzy logic program and a genetic algorithm, wherein said neural network predicts said turbulent atmospheric condition at a location in said flight path beyond a present location of said aircraft using an atmospheric information data collected from a plurality of sensors mounted to said aircraft and said one or more sources of atmospheric information.

47. The system of claim 45 or 46, wherein said computer network is a distributed processing network, wherein said distributed processing network comprises:
a first microserver comprising a prognostic health maintenance system and said means for predicting said turbulent atmospheric conditions in communication with an electronic engine controller, a full authority digital engine controller, a second microserver comprising an in-flight entertainment system in communication with a plurality of microprocessors.

48. The system of claim 45 or 46, wherein said computer network is a parallel processing network, wherein said parallel processing network comprises:
a supercomputer in parallel communication with an electronic engine controller, a full authority digital engine controller, a first microserver comprising a prognostic health maintenance system and said means for predicting said turbulent atmospheric condition, and a second microserver in communication with said one or more sources of atmospheric information.

49. The system of any one of claims 45 to 48, wherein said one or more sources of atmospheric information data comprises one or more satellites in orbit around the Earth, one or more atmospheric information collection facilities on Earth, one or more aircraft in flight and one or more sea-based vessels.

50. The system of any one of claims 45 to 49, further comprising a visual display to display said predicted turbulent atmospheric conditions to one or more flight crew.
